# EUROPEAN PATENT APPLICATION

(11) **EP 3 279 060 A1**
(43) Date of publication of application: **07.02.2018**
(21) Application number: 17184235.4
(22) Date of filing: 01.08.2017
(51) Int. Cl.: B62D 5/00, B62D 5/04

(54) **VEHICLE STEERING SYSTEM**

(30) Priority: 05.08.2016 JP 2016154898
(71) Applicant: JTEKT CORPORATION, Osaka-shi, Osaka 542-8502 (JP)
(72) Inventor: IZUTANI, Keisuke, Osaka-shi,, Osaka 542-8502 (JP); SAKAMAKI, Masahiko, Osaka-shi,, Osaka 542-8502 (JP); KAJI, Hiroaki, Osaka-shi,, Osaka 542-8502 (JP); YAMAKAWA, Tomonari, Osaka-shi,, Osaka 542-8502 (JP); SAKAI, Atsuo, Osaka-shi,, Osaka 542-8502 (JP); KADA, Tomoyasu, Osaka-shi,, Osaka 542-8502 (JP)
(74) Representative: Winter, Brandl, Fürniss, Hübner, Röss, Kaiser, Polte - Partnerschaft mbB

(57) **Abstract**

A vehicle steering system includes a clutch provided on a power transmission path extending from a steering wheel to steered wheels, a reactive-force motor connected to a first portion of the power transmission path, which is closer to the steering wheel than the clutch is, a steering motor including a first motor coil and a second motor coil, and connected to a second portion of the power transmission path, which is closer to the steered wheels than the clutch is, a driving circuit configured to supply electric power to the reactive-force motor, a first driving circuit configured to supply electric power to the first motor coil, and a second driving circuit configured to supply electric power to the second motor coil.

## Description

### BACKGROUND OF THE INVENTION

### 1. Field of the Invention

The invention relates to a vehicle steering system for a vehicle, such as an automobile.

### 2. Description of the Related Art

Japanese Patent Application Publication No. 2014-223862 (JP 2014-223862 A) describes a vehicle steering control system including a clutch, a reactive-force motor, and two steering motors. The clutch is provided on a power transmission path extending from a steering wheel to steered wheels. The reactive-force motor applies power to a portion of the power transmission path, which is closer to the steering wheel than the clutch is. The steering motors apply power to a portion of the power transmission path, which is closer to the steered wheels than the clutch is.

The vehicle steering control system described in JP 2014-223862 A includes the two steering motors. Thus, even when one of the steering motors is malfunctioning, the steered wheels can be steered by the other one of the steering motors. In view of this, the vehicle steering control system described in JP 2014-223862 A offers a high level of safety. However, the vehicle steering control system described in JP 2014-223862A is costly because the vehicle steering control system includes the two steering motors.

### SUMMARY OF THE INVENTION

One object of the invention is to provide a vehicle steering system that is less costly and that ensures safety.

An aspect of the invention relates to a vehicle steering system including: a steering member configured to steer a vehicle; a steering operation mechanism configured to steer steered wheels; a clutch provided on a power transmission path extending from the steering member to the steered wheels; a reactive-force motor connected to a first portion of the power transmission path, the first portion being closer to the steering member than the clutch is; a steering motor connected to a second portion of the power transmission path, the second portion being closer to the steered wheels than the clutch is, the steering motor including a first motor coil and a second motor coil; a reactive-force motor driving circuit configured to supply electric power to the reactive-force motor; a first driving circuit configured to supply electric power to the first motor coil; a second driving circuit configured to supply electric power to the second motor coil; a reactive-force motor controller configured to control the reactive-force motor driving circuit; a steering motor controller configured to control the first driving circuit in a first system including the first motor coil and the first driving circuit and the second driving circuit in a second system including the second motor coil and the second driving circuit; and a clutch controller configured to control the clutch.

### BRIEF DESCRIPTION OF THE DRAWINGS

The foregoing and further features and advantages of the invention will become apparent from the following description of example embodiments with reference to the accompanying drawings, wherein like numerals are used to represent like elements and wherein:
FIG. 1 is a diagram illustrating the schematic configuration of a vehicle steering system according to an embodiment of the invention;
FIG. 2 is a block diagram illustrating the electrical configuration of an electronic control unit (ECU);
FIG. 3 is a functional block diagram illustrating an operation of a steering motor controller in a steer-by-wire (SBW) mode;
FIG. 4 is a functional block diagram illustrating an operation of a reactive-force motor controller in the SBW mode;
FIG. 5 is a functional block diagram illustrating an operation of the steering motor controller in a first electric power steering (EPS) mode; and
FIG. 6 is a functional block diagram illustrating an operation of the reactive-force motor controller in a second EPS mode.

### DETAILED DESCRIPTION OF EMBODIMENTS

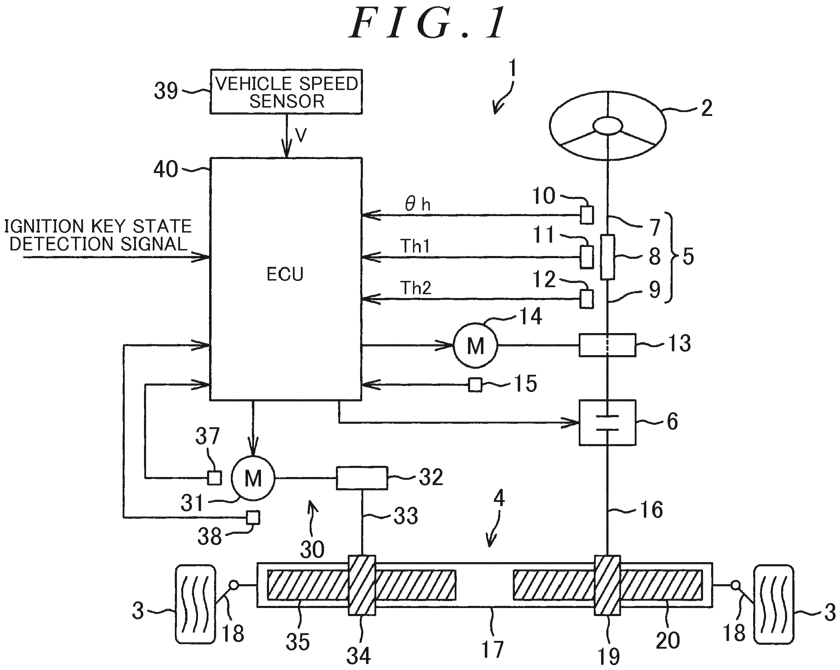

Hereinafter, example embodiments of the invention will be described in detail with reference to the accompanying drawings. FIG. 1 is a diagram illustrating the schematic configuration of a vehicle steering system according to an embodiment of the invention. A vehicle steering system 1 includes a steering wheel 2, a steering operation mechanism 4, a steering shaft 5, and a clutch 6. The steering wheel 2 is an example of a steering member for steering a vehicle. The steering operation mechanism 4 steers steered wheels 3. The steering shaft 5 is connected to the steering wheel 2. The clutch 6 mechanically connects the steering shaft 5 (steering wheel 2) to the steering operation mechanism 4 or mechanically disconnects the steering shaft 5 (steering wheel 2) from the steering operation mechanism 4. In the present embodiment, the clutch 6 is an electromagnetic clutch. The clutch 6 includes an input shaft and an output shaft. The clutch 6 has a function of permitting or interrupting transmission of torque between the input shaft and the output shaft.

The steering shaft 5 includes a first shaft 7, a second shaft 9, and a torsion bar 8. The first shaft 7 is connected to the steering wheel 2. The second shaft 9 is connected to the input shaft of the clutch 6 in an integrated manner. The torsion bar 8 connects the first shaft 7 to the second shaft 9. A steering angle sensor 10 for detecting a steering angle θh, which is a rotation angle of the first shaft 7, is disposed around the first shaft 7. In the present embodiment, the steering angle sensor 10 detects an amount of rotation (rotation angle) of the first shaft 7 in each of of forward and reverse directions from the neutral position of the first shaft 7. The steering angle sensor 10 outputs the amount of rotation to the right from the neutral position, for example, as a positive value, and outputs the amount of rotation to the left from the neutral position, for example, as a negative value.

A first torque sensor 11 and a second torque sensor 12 are disposed around the steering shaft 5. The torque sensors 11, 12 respectively detect steering torques Th1, Th2 applied to the steering wheel 2, based on an amount of relative rotational displacement between the first shaft 7 and the second shaft 9, that is, a torsion angle of the torsion bar 8. In the present embodiment, regarding the steering torques Th1, Th2 are respectively detected by the respective torque sensors 11, 12 as follows. A torque for steering to the right is detected as a positive value, and a torque for steering to the left is detected as a negative value. As the absolute value of the torque is greater, the magnitude of the steering torque is higher.

A reactive-force motor 14 is connected to the second shaft 9 via a speed reducer 13. The reactive-force motor 14 serves as an electric motor that applies a steering reactive force (torque applied in a direction opposite to a steering direction) to the steering wheel 2 in a normal state. In the present embodiment, the reactive-force motor 14 is a three-phase brushless motor. The speed reducer 13 is a worm gear mechanism including a worm shaft (not illustrated) and a worm wheel (not illustrated). The worm shaft is connected to an output shaft of the reactive-force motor 14 so as to be rotatable together with the output shaft thereof in an integrated manner. The worm wheel is meshed with the worm shaft. The worm wheel is connected to the second shaft 9 so as to be rotatable together with the second shaft 9 in an integrated manner. The reactive-force motor 14 is provided with a rotation angle sensor 15 for detecting a rotation angle of the reactive-force motor 14.

The steering operation mechanism 4 includes a first pinion shaft 16, a rack shaft 17 serving as a steered shaft, and a steering actuator 30. The first pinion shaft 16 is connected to the output shaft of the clutch 6. The steering actuator 30 applies a steering force to the rack shaft 17. The steered wheels 3 are connected to respective end portions of the rack shaft 17 via tie rods 18 and knuckle arms (not illustrated). A first pinion 19 is connected to a distal end of the first pinion shaft 16. The rack shaft 17 extends linearly in the lateral direction of the vehicle. A first rack 20 meshed with the first pinion 19 is provided at a first end portion of the rack shaft 17 in its axial direction.

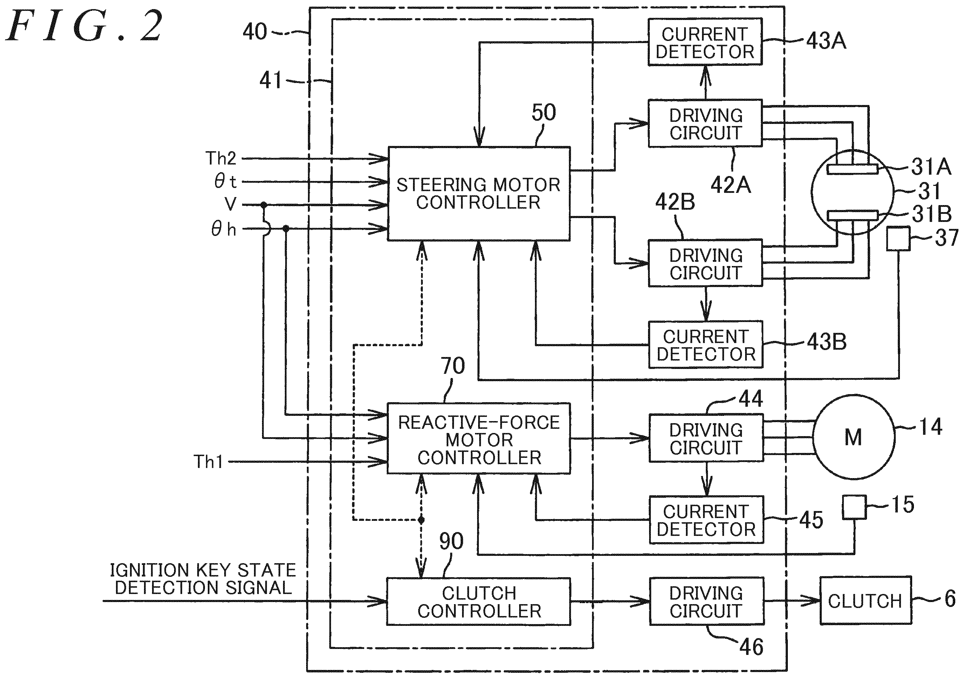

The steering actuator 30 includes a steering motor 31, a speed reducer 32, a second pinion shaft 33, a second pinion 34, and a second rack 35. In the present embodiment, the steering motor 31 is a three-phase brushless motor including one rotor and two sets of three-phase motor coils (three-phase stator coils) 31A, 31B (see FIG. 2). The rotor includes a plurality of magnets provided at an outer peripheral portion thereof. The second pinion shaft 33 is disposed separately from the steering shaft 5. The speed reducer 32 is a worm gear mechanism including a worm shaft (not illustrated) and a worm wheel (not illustrated). The worm shaft is connected an output shaft of the steering motor 31 so as to be rotatable together with the output shaft thereof in an integrated manner. The worm wheel (not illustrated) is meshed with the worm shaft. The worm wheel is connected to the second pinion shaft 33 so as to be rotatable together with the second pinion shaft 33 in an integrated manner.

The second pinion 34 is connected to a distal end of the second pinion shaft 33. The second rack 35 is provided at a second end portion of the rack shaft 17. The second end portion is on the opposite side of the rack shaft 17 from the first end portion in the axial direction. The second pinion 34 is meshed with the second rack 35. The steering motor 31 is provided with a rotation angle sensor 37 for detecting a rotation angle of the steering motor 31. A stroke sensor 38 for detecting an axial travel distance of the rack shaft 17 is disposed in the vicinity of the rack shaft 17. A steered angle θt of the steered wheels 3 is detected based on the axial travel distance of the rack shaft 17 detected by the stroke sensor 38.

Detection signals from the steering angle sensor 10, the torque sensors 11, 12, the rotation angle sensors 15, 37, the stroke sensor 38, and the vehicle speed sensor 39, and a state detection signal indicating the state of an ignition key are input into an electronic control unit (ECU) 40. Based on the input signals, the ECU 40 controls the clutch 6, the reactive-force motor 14, and the steering motor 31.

FIG. 2 is a block diagram illustrating the electrical configuration of the ECU 40. The ECU 40 includes a microcomputer 41. The ECU 40 includes a first driving circuit (inverter circuit) 42A and a second driving circuit (inverter circuit) 42B. The first driving circuit 42A and the second driving circuit 42B are controlled by the microcomputer 41, and respectively supply electric power to the first motor coil 31A and the second motor coil 31B of the steering motor 31. The ECU 40 includes a first current detector 43A and a second current detector 43B that respectively detect motor currents to be supplied to the first motor coil 31A and the second motor coil 31B. The ECU 40 includes a driving circuit (inverter circuit) 44 and a current detector 45. The driving circuit 44 is controlled by the microcomputer 41, and supplies electric power to the reactive-force motor 14. The current detector 45 detects a motor current to be supplied to the reactive-force motor 14. The ECU 40 includes a driving circuit 46 that is controlled by the microcomputer 41 and that drives the clutch 6.

The microcomputer 41 includes a central processing unit (CPU) and memories (e.g., a read-only memory (ROM), a random-access memory (RAM), and a nonvolatile memory), and functions as a plurality of function processing units by executing prescribed programs. The function processing units include a steering motor controller 50, a reactive-force motor controller 70, and a clutch controller 90. The steering motor controller 50 controls the steering motor 31. The reactive-force motor controller 70 controls the reactive-force motor 14. The clutch controller 90 controls the clutch 6.

The clutch 6 is, for example, normally engaged, and is disengaged by being energized. The clutch 6 is controlled as follows depending on the state of the ignition key. When the ignition key is operated to an on-position, the clutch 6 is energized to be disengaged. When the ignition key is operated from the on-position to an off-position, the clutch 6 is de-energized to be engaged.

The steering motor controller 50 has a function of notifying the reactive-force motor controller 70 and the clutch controller 90 of the occurrence of a malfunction when the malfunction has occurred in a first system including the first motor coil 31A of the steering motor 31 and the first driving circuit 42A or a second system including the second motor coil 31B of the steering motor 31 and the second driving circuit 42B. The reactive-force motor controller 70 has a function of notifying the steering motor controller 50 and the clutch controller 90 of the occurrence of a malfunction when the malfunction has occurred in the reactive-force motor 14 or the driving circuit 44.

When the reactive-force motor 14 and the driving circuit 44 are functioning normally and at least one of the first system (31A, 42A) and the second system (31B, 42B) is functioning normally, the reactive-force motor controller 70, the steering motor controller 50, and the clutch controller 90 operate in a steer-by-wire mode (hereinafter, referred to as "SBW mode"). That is, the operation mode of each of the controllers 50, 70, 90 is set to the SBW mode. In the SBW mode, the clutch 6 is disengaged under the control of the clutch controller 90. A steering reactive force is applied to the steering wheel 2 from the reactive-force motor 14 under the control of the reactive-force motor controller 70. The steered wheels 3 are steered by the steering motor 31 under the control of the steering motor controller 50.

In the SBW mode, when a malfunction has occurred in one of the first system (31A, 42A) and the second system (31B, 42B), the steering motor controller 50 controls the steering motor 31 by using the system that is functioning normally, thereby steering the steered wheels 3. When a malfunction has occurred in the reactive-force motor 14 or the driving circuit 44 and at least one of the first system (31 A, 42A) and the second system (31B, 42B) is functioning normally, the steering motor controller 50 and the clutch controller 90 operate in a first power steering mode (EPS mode). That is, the operation mode of each of the controllers 50, 70, 90 is set to the first EPS mode. In the first EPS mode, the clutch 6 is engaged under the control of the clutch controller 90. Further, a steering assist force is generated by the steering motor 31 under the control of the steering motor controller 50.

In the first EPS mode, when a malfunction has occurred in one of the first system (31A, 42A) and the second system (31B, 42B), the steering motor controller 50 controls the steering motor 31 by using the system functioning normally, thereby causing the steering motor 31 to generate a steering assist force. When a malfunction has occurred in each of both the first system (31A, 42A) and the second system (31B, 42B) and the reactive-force motor 14 and the driving circuit 44 are functioning normally, the reactive-force motor controller 70 and the clutch controller 90 operate in a second power steering mode (EPS mode). That is, the operation mode of each of the control units 50, 70, 90 is set to the second EPS mode. In the second EPS mode, the clutch 6 is engaged under the control of the clutch controller 90. Further, a steering assist force is generated by the reactive-force motor 14 under the control of the reactive-force motor controller 70.

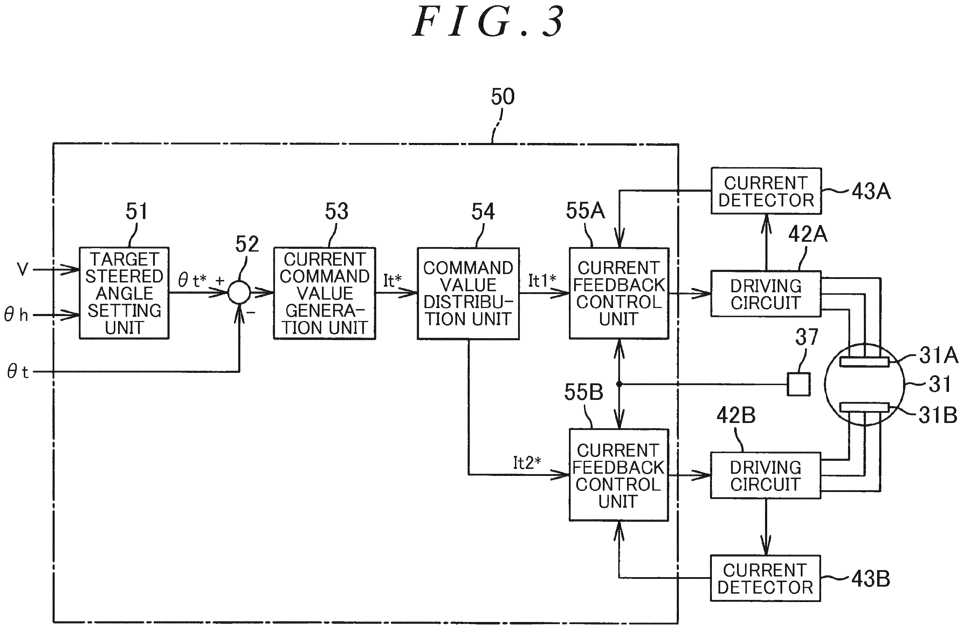

When a malfunction has occurred in the reactive-force motor 14 or the driving circuit 44 and a malfunction has occurred in each of both the first system of the steering motor 31 and the second system of the steering motor 31, the clutch 6 is engaged under the control of the clutch controller 90. FIG. 3 is a functional block diagram illustrating an operation of the steering motor controller 50 in the SBW mode.

In the SBW mode, the clutch 6 is disengaged. Thus, the steering shaft 5 and the first pinion shaft 16 are disconnected from each other. In the SBW mode, the steering motor controller 50 includes, as function processing units thereof, a target steered angle setting unit 51, an angle deviation calculation unit 52, a current command value generation unit 53, a command value distribution unit 54, a first current feedback control unit 55A, and a second current feedback control unit 55B.

The target steered angle setting unit 51 sets a target steered angle θt* based on the vehicle speed V detected by the vehicle speed sensor 39 and the steering angle θh detected by the steering angle sensor 10. For example, the target steered angle setting unit 51 sets the target steered angle θt* corresponding to the vehicle speed V and the steering angle θh, using a prescribed transfer function. The angle deviation calculation unit 52 calculates a deviation between the target steered angle θt* set by the target steered angle setting unit 51 and an actual steered angle θt detected by the stroke sensor 38.

The current command value generation unit 53 executes, for example, PI calculation on the angle deviation calculated by the angle deviation calculation unit 52. Thus, a motor current command value It* (a two-phase current command value (a d-axis current command value and a q-axis current command value)) is generated. The command value distribution unit 54 distributes the motor current command value It* generated by the current command value generation unit 53 to the first current feedback control unit 55A and the second current feedback control unit 55B. In the present embodiment, when the first system and the second system of the steering motor 31 are both functioning normally, the command value distribution unit 54 distributes half of the motor current command value It* to each of the first current feedback control unit 55A and the second current feedback control unit 55B. That is, a distribution ratio of the motor current command value It* for the first current feedback control unit 55A and a distribution ratio of the motor current command value It* for the second current feedback control unit 55B are both 50%.

On the other hand, when a malfunction (failure) has occurred in one of the first system and the second system of the steering motor 31, the distribution ratio for the control unit corresponding to the normally functioning system, among the first current feedback control unit 55A and the second current feedback control unit 55B, is set to 100%, and the distribution ratio for the control unit corresponding to the malfunctioning system, among the first current feedback control unit 55A and the second current feedback control unit 55B, is set to 0%. The motor current command value distributed to the first current feedback control unit 55A will be referred to as "first motor current command value It1*". The motor current command value distributed to the second current feedback control unit 55B will be referred to as "second motor current command value It2*".

The first current feedback control unit 55A controls the first driving circuit 42A through known vector control using an output signal from the rotation angle sensor 37, such that a motor current (a d-axis current and a q-axis current) detected by the first current detector 43A and subjected to the three-phase-to-two-phase conversion is equal to the first motor current command value It1*. The second current feedback control unit 55B controls the second driving circuit 42B through known vector control using an output signal from the rotation angle sensor 37, such that a motor current (a d-axis current and a q-axis current) detected by the second current detector 43B and subjected to the three-phase-to-two-phase conversion is equal to the second motor current command value It2*. Thus, the steering motor 31 is controlled such that the actual steered angle θt detected by the stroke sensor 38 is equal to the target steered angle θt* that is set by the target steered angle setting unit 51.

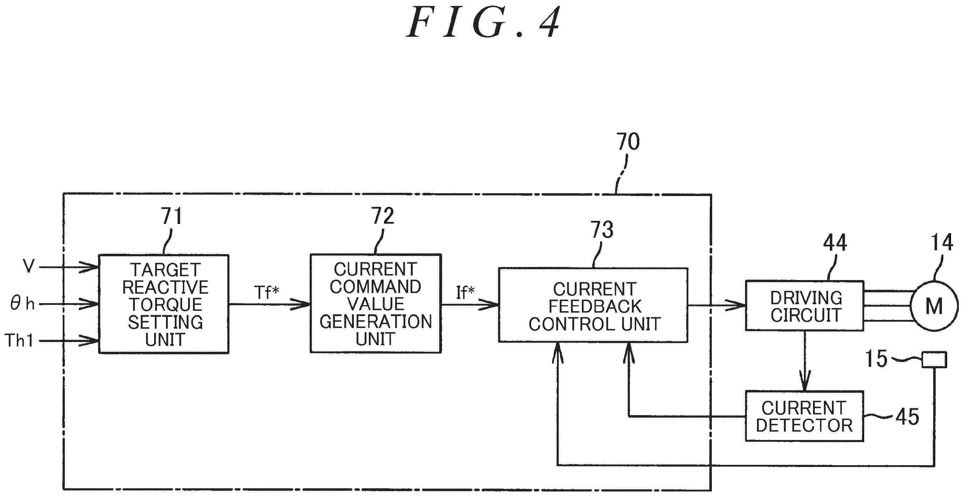

FIG. 4 is a functional block diagram illustrating an operation of the reactive-force motor controller 70 in the SBW mode. In the SBW mode, the reactive-force motor controller 70 includes, as function processing units thereof, a target reactive torque setting unit 71, a current command value generation unit 72, and a current feedback control unit 73.

The target reactive torque setting unit 71 sets a target reactive torque Tf* based on the vehicle speed V detected by the vehicle speed sensor 39, the steering angle θh detected by the steering angle sensor 10, and the steering torque Th1 detected by the first torque sensor 11. For example, the target reactive torque setting unit 71 obtains a target reactive torque basic value based on the steering angle θh and the vehicle speed V. The target reactive torque setting unit 71 sets the target reactive torque Tf* by multiplying the target reactive torque basic value by a gain corresponding to the steering torque Th1.

The current command value generation unit 72 generates a motor current command value If* (a d-axis current command value and a q-axis current command value) corresponding to the target reactive torque Tf* calculated by the target reactive torque setting unit 71. The current feedback control unit 73 controls the driving circuit 44 through known vector control using an output signal from the rotation angle sensor 15, such that a motor current (a d-axis current and a q-axis current) detected by the current detector 45 and subjected to the three-phase-to-two-phase conversion is equal to the motor current command value If* generated by the current command value generation unit 72.

Thus, the reactive-force motor 14 is controlled such that the motor torque corresponding to the target reactive torque Tf* is generated from the reactive-force motor 14. The first torque sensor 11 detects a steering torque that is applied to the steering shaft 5 that is a power transmission path extending from the steering wheel 2 to the clutch 6. In this way, it is possible to detect a torque substantially equal to the steering torque that is applied to the steering wheel 2 by a driver. Thus, it is possible to set the target reactive torque Tf* corresponding to the steering torque that is applied to the steering wheel 2 by the driver. As a result, it is possible to achieve a better steering feel than that in a case where a torque that is applied to the power transmission path extending from the clutch 6 to the steered wheels 3 is detected and the target reactive torque is set based on the detected value.

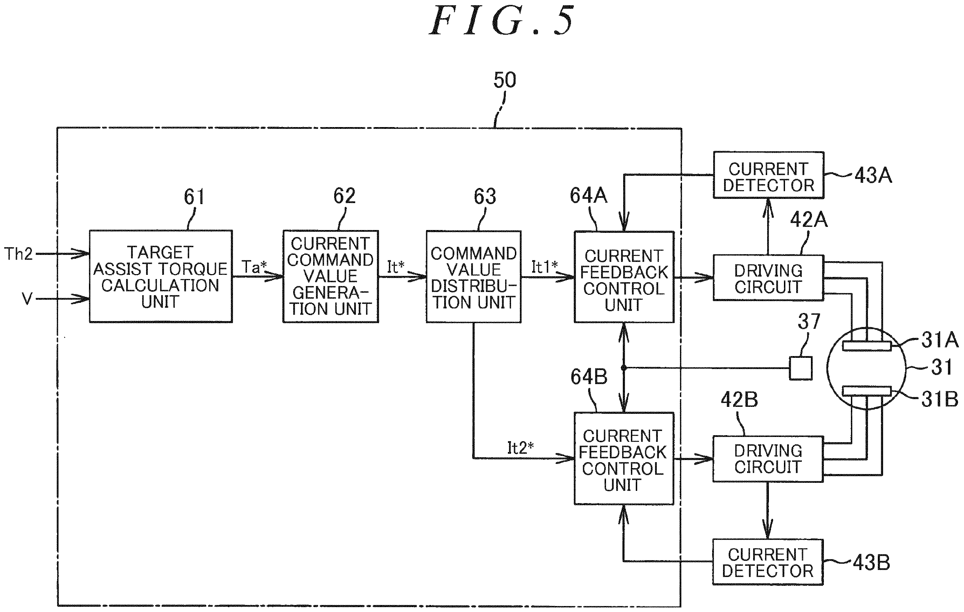

FIG. 5 is a functional block diagram illustrating an operation of the steering motor controller 50 in the first EPS mode. In the first EPS mode, the clutch 6 is engaged. Thus, the steering shaft 5 and the first pinion shaft 16 are connected to each other. In the first EPS mode, the steering motor controller 50 includes, as function processing units thereof, a target assist torque calculation unit 61, a current command value generation unit 62, a command value distribution unit 63, a first current feedback control unit 64A, and a second current feedback control unit 64B.

The target assist torque calculation unit 61 sets a target assist torque Ta* based on the steering torque Th2 detected by the second torque sensor 12 and the vehicle speed V detected by the vehicle speed sensor 39. The target assist torque calculation unit 61, for example, calculates the target assist torque Ta* by multiplying the steering torque Th2 by a vehicle speed gain corresponding to the vehicle speed V. The vehicle speed gain is a smaller value as the vehicle speed V is higher. Thus, the absolute value of the target assist torque Ta* is greater as the absolute value of the steering torque Th2 is greater, and the absolute value of the target assist torque Ta* is smaller as the vehicle speed V is higher.

The current command value generation unit 62 generates a motor current command value It* (a d-axis current command value and a q-axis current command value) corresponding to the target assist torque Ta* calculated by the target assist torque calculation unit 61. The command value distribution unit 63 distributes the motor current command value It* generated by the current command value generation unit 62 to the first current feedback control unit 64A and the second current feedback control unit 64B. In the present embodiment, when the first system and the second system of the steering motor 31 are both functioning normally, the command value distribution unit 63 distributes half of the motor current command value It* to each of the first current feedback control unit 64A and the second current feedback control unit 64B. That is, a distribution ratio of the motor current command value It* for the first current feedback control unit 64A and a distribution ratio of the motor current command value It* for the second current feedback control unit 64B are both 50%.

On the other hand, when a malfunction (failure) has occurred in one of the first system and the second system of the steering motor 31, the distribution ratio for the control unit corresponding to the normally functioning system, among the first current feedback control unit 64A and the second current feedback control unit 64B, is set to 100%, and the distribution ratio for the control unit corresponding to the malfunctioning system, among the first current feedback control unit 64A and the second current feedback control unit 64B, is set to 0%. The motor current command value distributed to the first current feedback control unit 64A will be referred to as "first motor current command value It1*". The motor current command value distributed to the second current feedback control unit 64B will be referred to as "second motor current command value It2*".

The first current feedback control unit 64A controls the first driving circuit 42A through known vector control using an output signal from the rotation angle sensor 37, such that a motor current (a d-axis current and a q-axis current) detected by the first current detector 43A and subjected to the three-phase-to-two-phase conversion is equal to the first motor current command value It1*. The second current feedback control unit 64B controls the second driving circuit 42B through known vector control using an output signal from the rotation angle sensor 37, such that a motor current (a d-axis current and a q-axis current) detected by the second current detector 43B and subjected to the three-phase-to-two-phase conversion is equal to the second motor current command value It2*.

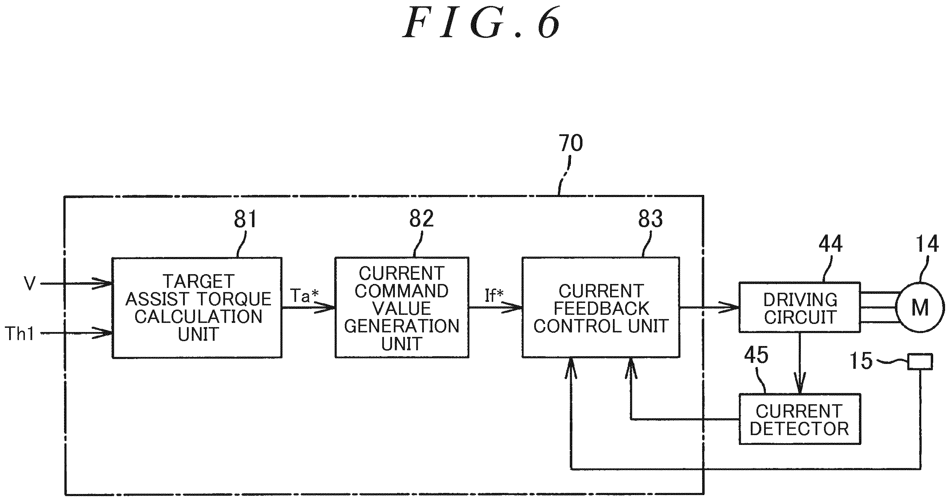

Thus, the steering motor 31 is controlled such that the motor torque corresponding to the target assist torque Ta* is generated by the steering motor 31. As a result, a steering assist force corresponding to the steering torque is generated. FIG. 6 is a functional block diagram illustrating an operation of the reactive-force motor controller 70 in the second EPS mode.

In the second EPS mode, the clutch 6 is engaged. Thus, the steering shaft 5 and the first pinion shaft 16 are connected to each other. In the second EPS mode, the reactive-force motor controller 70 includes, as function processing units thereof, a target assist torque calculation unit 81, a current command value generation unit 82, and a current feedback control unit 83.

The target assist torque calculation unit 81 sets a target assist torque Ta* based on the vehicle speed V detected by the vehicle speed sensor 39 and the steering torque Th1 detected by the first torque sensor 11. The target assist torque calculation unit 81 calculates, for example, the target assist torque Ta* by multiplying the steering torque Th1 by a vehicle speed gain corresponding to the vehicle speed V. The vehicle speed gain is a smaller value as the vehicle speed V is higher. Thus, the absolute value of the target assist torque Ta* is greater as the absolute value of the steering torque Th1 is greater, and the absolute value of the target assist torque Ta* is smaller as the vehicle speed V is higher.

The current command value generation unit 82 generates a motor current command value If* (a d-axis current command value and a q-axis current command value) corresponding to the target assist torque Ta* calculated by the target assist torque calculation unit 81. The current feedback control unit 83 controls the driving circuit 44 through known vector control using an output signal from the rotation angle sensor 15, such that a motor current (a d-axis current and a q-axis current) detected by the current detector 45 and subjected to the three-phase-to-two-phase conversion is equal to the motor current command value if* generated by the current command value generation unit 82.

Thus, the reactive-force motor 14 is controlled such that the motor torque corresponding to the target assist torque Ta* is generated by the reactive-force motor 14. As a result, a steering assist force corresponding to the steering torque is generated. The vehicle steering system according to the foregoing embodiment is less costly than the vehicle steering control system described in JP 2014-223862 A in which two steering motors are provided. The steering motor 31 includes the motor coils 31A, 31B respectively corresponding to two systems. Thus, the steering motor 31 offers a higher level of safety than the steering motor including a motor coil corresponding to only one system. That is, according to the foregoing embodiment, it is possible to achieve cost reduction while ensuring safety.

While one example embodiment of the invention has been described above, the invention may be implemented in various other embodiments. For example, in the foregoing embodiment, the steered angle θt of the steered wheels 3 is detected based on the axial travel distance of the rack shaft 17 detected by the stroke sensor 38. However, the steered angle θt of the steered wheels 3 may be detected based on the rotation angle of the steering motor 31 detected by the rotation angle sensor 37.

The first torque sensor 11 and the second torque sensor 12 are provided in the foregoing embodiment. Alternatively, a single torque sensor may be provided. In this case, the steering torque detected by the single torque sensor is provided to both the steering motor controller 50 and the reactive-force motor controller 70. Further, various design changes may be made within the technical scope defined in the appended claims.

## Claims

1. A vehicle steering system comprising:
a steering member configured to steer a vehicle;
a steering operation mechanism configured to steer steered wheels;
a clutch provided on a power transmission path extending from the steering member to the steered wheels;
a reactive-force motor connected to a first portion of the power transmission path, the first portion being closer to the steering member than the clutch is;
a steering motor connected to a second portion of the power transmission path, the second portion being closer to the steered wheels than the clutch is, the steering motor including a first motor coil and a second motor coil;
a reactive-force motor driving circuit configured to supply electric power to the reactive-force motor;
a first driving circuit configured to supply electric power to the first motor coil;
a second driving circuit configured to supply electric power to the second motor coil;
a reactive-force motor controller configured to control the reactive-force motor driving circuit;
a steering motor controller configured to control the first driving circuit in a first system including the first motor coil and the first driving circuit and the second driving circuit in a second system including the second motor coil and the second driving circuit; and
a clutch controller configured to control the clutch.

2. The vehicle steering system according to claim 1, wherein, when the reactive-force motor and the reactive-force motor driving circuit are functioning normally and at least one of the first system and the second system is functioning normally, an operation mode of each of the reactive-force motor controller, the steering motor controller, and the clutch controller is set to a steer-by-wire mode, the clutch controller controls the clutch to disengage the clutch, the reactive-force motor controller controls the reactive-force motor to apply a steering reactive force to the steering member from the reactive-force motor, and the steering motor controller controls the steering motor such that the steered wheels are steered by the steering motor.

3. The vehicle steering system according to claim 2, wherein, when a malfunction has occurred in one of the first system and the second system in the steer-by-wire mode, the steering motor controller controls the steering motor using the other one of the first system and the second system, which is functioning normally, to steer the steered wheels.

4. The vehicle steering system according to any one of claims 1 to 3, wherein, when a malfunction has occurred in the reactive-force motor or the reactive-force motor driving circuit and at least one of the first system and the second system is functioning normally, an operation mode of each of the reactive-force motor controller, the steering motor controller, and the clutch controller is set to a first power steering mode, the clutch controller controls the clutch to engage the clutch, and the steering motor controller controls the steering motor such that the steering motor generates a steering assist force.

5. The vehicle steering system according to claim 4, wherein, when a malfunction has occurred in one of the first system and the second system in the first power steering mode, the steering motor controller controls the steering motor using the other one of the first system and the second system, which is functioning normally, such that the steering motor generates a steering assist force.

6. The vehicle steering system according to any one of claims 1 to 5, wherein, when a malfunction has occurred in each of both the first system and the second system and the reactive-force motor and the reactive-force motor driving circuit are functioning normally, an operation mode of each of the reactive-force motor controller, the steering motor controller, and the clutch controller is set to a second power steering mode, the clutch controller controls the clutch to engage the clutch, and the reactive-force motor controller controls the reactive-force motor such that the reactive-force motor generates a steering assist force.

7. The vehicle steering system according to any one of claims 1 to 6, further comprising a torque sensor configured to detect a steering torque that is applied to the first portion of the power transmission path, the first portion being closer to the steering member than the clutch is,
wherein the reactive-force motor controller is configured to control the reactive-force motor driving circuit using the steering torque detected by the torque sensor.
